# EUROPEAN PATENT APPLICATION

(11) **EP 1 770 620 A2**
(43) Date of publication of application: **04.04.2007**
(21) Application number: 06019150.9
(22) Date of filing: 13.09.2006
(51) Int. Cl.: G06Q 10/00

(54) **Method for modelling processing procedures**

(30) Priority: 19.09.2005 US 717739 P
(71) Applicant: SAP AG, 69190 Walldorf (DE)
(72) Inventor: Westendorf, Frank, 76698 Ubstadt-Weiher (DE)
(74) Representative: Hössle Kudlek & Partner

(57) **Abstract**

The present invention relates to a method for the implementation of a processing procedure on an object allocated to an object category as an instance of an object type in a computer system, in which the object is broken down into separately processable, hierarchically classifiable sub-objects as instances of corresponding sub-object types, at least some of the sub-objects are processed by means of respective predetermined partial processing procedures specific to the sub-object type, processing results obtained therefrom specific to the sub-object are made available, are combined via a functional relationship in a processing procedure of higher rank than the partial processing procedures, and an object-specific processing result for the processing procedure is derived therefrom, wherein in order to implement the partial processing procedures specific to the sub-object type, object attributes and/or attributes of other sub-objects, in particular hierarchically correspondingly higher-ranking sub-objects, are in each case temporarily made available.

In addition the present invention relates to a corresponding system, a computer program and a computer program product. The present invention contributes *inter alia* to an improvement of the transparency and reusability of processing modules, as well as at the same time to a reduction of volumes of data to be transferred.

## Description

### Field of the Invention

The present invention relates to a method for modelling processing procedures on business objects in a computer system. In particular the present invention relates to a method for the effective implementation of a processing procedure on such a complex business object, without a process modeller having to master and/or use a technical modelling component, such as for example a programming language or workbench. The present invention also relates to a corresponding system for managing business objects and for the effective implementation of a processing procedure on a complex business object. The present invention moreover relates to a corresponding computer program and a computer program product.

### Background of the invention

Business objects are as a rule hierarchically organised complex structures that are built up of components that may have widely varying types of properties. For this reason the set of data that is required in order to be able adequately to describe a business object is very large. Moreover, calculations that have to be carried out and that are based on information included in the set of data are very complex and time-consuming.

In most cases properties of hierarchically classifiable components of a higher-ranking business object are in each case specialisations of properties of correspondingly higher-ranking components, from which it is generally to be concluded that their respective value can be derived with a high degree of probability directly or at least explicitly from the value of the correspondingly higher-ranking components. Storage of this information in a complete data model requires a great deal of storage space and time. Calculations that are to be carried out on business objects, such as for example estimates, evaluations or price determinations, in which the business object itself is one of the complex business models described above, are accordingly likewise generally very complex and time-consuming since hitherto known calculation mechanisms for a respective problem situation are based on a global calculation approach, in which all necessary information must arrive together so as to provide a relatively internally transparent method of calculation, which however in addition often involves redundant calculation steps.

In addition, at component interfaces an information requirement of a processing component is, as a rule, not known. Consequently, the component that requires a corresponding service and/or addresses a processing component is not able to file all the data at the optimum location for the processing, but is limited to supplying its state of knowledge as completely as possible but in a redundant-free manner.

### Summary of the Invention

Against the background of the aforementioned prior art it would now be desirable to provide a possibility of being able to model in detail complex business objects, and processing procedures to be implemented in connection therewith, so that a more effective and rapid implementation of processing procedures on corresponding business objects could be realised.

An object of the present invention was accordingly to provide a method by means of which an effective implementation of at least one processing procedure can be carried out on a business object in a computer system. A further object of the present invention was to provide a corresponding system.

This object is achieved by means of a method having the features of claim 1 and by a system having the features of claim 8. Further preferred embodiments are disclosed in the corresponding subclaims. Furthermore, a computer program having the features of claim 14 and a computer program product having the features of claim 15 are made available.

According to claim 1 a method is provided for the implementation of a processing procedure on an object allocated to an object category, as instance of an object type in a computer system, in which the object is broken down into separately processable, hierarchically classifiable sub-objects as instances of corresponding sub-object types, and at least some of the sub-objects are processed by means of respective predetermined partial processing procedures specific to the sub-object type. Sub-object specific processing results obtained therefrom are made available and combined in a processing procedure of higher rank than the partial processing procedures via a functional relationship, and an object-specific processing result for the processing procedure is derived therefrom. In order to implement the partial processing procedures specific to the sub-object type, in each case object attributes or attributes of other sub-objects, in particular hierarchically higher-ranking sub-objects, are temporarily provided and employed.

The breakdown of the object into separately processable, hierarchically classifiable sub-objects means that specific object properties can be allocated to corresponding sub-objects, so that a redundancy as regards the object properties can be avoided. By means of such a breakdown it is furthermore possible to define and predetermine for each sub-object as an instance of a corresponding sub-object type, one or more partial processing procedures specific to the sub-object type, which on account of the fact that it operates only on a sub-object is far less complex than a global processing procedure to be carried out on the higher-ranking object. In order to implement the respective partial processing procedures specific to the sub-object type, it is now envisaged to provide temporarily in each case object attributes or attributes of other sub-objects. In this connection in particular attributes of higher-ranking sub-objects are provided for those sub-objects that are hierarchically subordinate to them.

In an embodiment of the method according to the invention in each case a temporary storage structure and/or a non-permanent object type is generated for the temporary provision of the object attributes and/or attributes of hierarchically higher-ranking sub-objects, in which the attributes are temporary filed and can be transferred to the corresponding partial processing procedures specific to the sub-object type. In this connection process-specific rules can be appropriately predetermined in each case for a partial processing procedure specific to the sub-object type, according to which attributes of higher-ranking sub-objects or object attributes are used, and are correspondingly passed on or transmitted as such. An implementation of such a temporary rule-based transmission of attributes from higher-ranking sub-objects to correspondingly subordinate sub-objects is associated with a high potential for saving, both as regards the required processing time as well as the required storage space within the computer system.

Thus, process-relevant attributes, on the part of a process component are targeted and by means of simple, quick rules made available in a redundant manner at the correct time to the corresponding partial processing procedures, without the process modeller having had to use a technical implementation layer for this purpose.

In a further embodiment of the method according to the invention the temporarily generated storage structure and/or the non-permanent object type is in each case only provided with the attributes required for the implementation of a corresponding partial processing procedure specific to the sub-object type. In addition, a further saving in storage space can be achieved. The temporarily generated storage structure may nevertheless have a structure or mask that can be generalised, so that it can be generally used for a temporary transmission of attributes, and from case to case is occupied with various attributes only depending on the partial processing procedures specific to the sub-object type.

In yet a further embodiment of the method according to the invention, as already mentioned the attributes are automatically temporarily provided, in particular in a process-specific, process-step-specific and/or object-specific manner, according to predefined rules implemented in the computer system. This means that for example at the start of the process the attributes are automatically transmitted and made available.

Due to the method provided according to the invention a processing procedure on a business object is broken down into partial processing procedures on corresponding sub-objects of the business object that are to be carried out independently of one another, and their corresponding processing results are in turn cumulatively compiled in order to obtain an overall result. Accordingly, each sub-object can be associated as an instance of a sub-object type with reusable partial processing procedures specific to the sub-object type, which as a rule are greatly simplified compared to a higher-ranking overall processing procedure, whereby a high degree of transparency and systematic reusability can be achieved. This means that a sub-object type can correspondingly be associated with one or more types of partial processing procedures specific to the sub-object type. Due to the breakdown of the business object into sub-objects, on which the corresponding partial processing procedures specific to the sub-object type can be carried out, a minimisation of redundant calculations is also achieved.

In yet a further embodiment of the method according to the invention both the object as well as the sub-objects of the object are each represented, filed and moreover instantiated in a databank of the computer system by one or more hierarchically classifiable directories specific to the object type and sub-object type. In this connection the directory or directories is/are in each case structured in a generalisable manner, i.e. the respective mask of the directory or directories is not specific to exactly one object or one sub-object.

Furthermore it is conceivable to transfer the partial processing procedures on the sub-objects that are specific to the sub-object type, via correspondingly implemented interfaces to external processing units, in particular computer units, for the purposes of implementation.

In order to implement partial processing procedures specific to the sub-object type it is conceivable to provide, apart from attributes of the higher-ranking object or higher-ranking sub-objects, temporarily in each case, intermediate processing results. These results may for example be processing results of completed partial processing procedures of subordinate sub-objects. This means that whereas attributes can in general, as regards the hierarchical structure of the object into sub-objects, be transferred from the top down and made available, processing results of partial processing procedures are passed on from the bottom up, where they are made available for further processing. This can likewise be initiated automatically.

By means of the method according to the invention it is possible to make a business object available to an external processing business application via an interface without the need to transmit a large volume of data. On account of the temporary, in particular rule-based provision of attributes for the implementation of partial processing procedures specific to the sub-object type, it is not necessary for these attributes to be made permanently available, so that the data load to be provided via a corresponding interface can be kept small.

In the case for example where the business object is to be made available to a processing component or business application via a corresponding interface for the handling and/or processing of for example a partial processing procedure, thanks to the method according to the invention, it is not necessary to allocate to the sub-object to be processed, already at the interface, all the attributes required for the implementation of the partial processing procedure, and thus to transfer a large data load at the interface. The required attributes are instead temporarily provided automatically, in particular in a process-specific, process step-specific and/or transaction-specific manner, in the processing according to implemented rules. Accordingly, just the processing component needs to have information on which attributes are required for which of the processing procedures to be carried out by it.

Accordingly, when transferring a business object to a processing business application or a processing component no knowledge needs to be made available at the corresponding interface, such as for example when which attributes have to be provided for implementing which processing or partial processing procedure. Attributes need to be provided in just as small amount in a redundant manner in order thereby to ensure that in all cases all attributes are allocated to each sub-object, irrespective of whether a processing of the sub-object requires the attributes at all. As already mentioned, the so-called transmission rules, according to which attributes are provided, are predefined and implemented. When implementing a partial processing procedure specific to a sub-object type within the framework of the implementation of a processing procedure of a business sub-object, the corresponding attributes are automatically temporarily transferred, according to the implemented transmission rules, to the corresponding partial processing procedure and made available.

Furthermore, it is conceivable to file the partial processing procedures specific to a sub-object type in a form of library so that they can easily be retrieved and reused. According to such a scheme, for each hierarchy stage within a hierarchically broken down object or object type, partial processing procedures or types of partial processing procedures can be filed in a library and can be made retrievable. A processing procedure on a business object is accordingly realised by an aggregation of hierarchically classifiable partial processing procedures on corresponding hierarchically classified sub-objects.

The "father-child" model as regards the object type employed in the process is based on a directed network. The correspondingly hierarchically constructed model associated therewith of corresponding calculations and processing procedures is therefore also directed. The processing sequence can be specified *ab initio* and higher-ranking processing procedures and calculations may, being aggregations, use the processing results of subordinate processing procedures and calculations. In this connection it should be noted that in general a higher-ranking object may only use the processing results of sub-objects that are subordinate to it. This means that higher-ranking partial processing procedures and/or calculations obtain their context from their respective associated object or sub-object.

It is conceivable that, for an object type, there are simple partial processing procedures specific to the sub-object type as well as complex types of partial processing procedures that are based on the simpler types. In this case a processing procedure hierarchy for an object or sub-object is established that permits an efficient reutilisation of a corresponding processing procedure library.

In addition the present invention relates to a system for managing objects and for carrying out at least one processing procedure on at least one of the objects allocated in each case to an object category. In this connection the object is filed as an instance of an object type into separately processable and hierarchically organised sub-objects as instances of corresponding sub-object types and is filed in a memory unit. In addition at least one processing unit is made available, in which there are provided partial processing procedures specific to the sub-object type, with which at least some of the sub-objects can be processed, and a processing procedure that is higher ranking than the partial processing procedures, in which results of partial processing procedures specific to the sub-object types are combined via a functional connection and from this a processing result specific to the sub-object type can be derived for the processing procedure. In addition to this the system comprises a control unit that is suitable or designed to make available temporarily in each case object attributes and/or attributes of other sub-objects, in particular hierarchically correspondingly higher-ranking sub-objects, for the implementation of the partial processing procedures specific to the sub-object type.

In a possible embodiment of the system according to the invention the control unit is in this connection suitable for generating, for the temporary provision of the attributes of the object or other, in particular hierarchically higher-ranking, sub-objects for the corresponding sub-objects to be processed, in each case a temporary storage structure or a non-permanent object type, in which the attributes can be temporarily filed and transferred to the corresponding partial processing procedures specific to the sub-object type.

In this connection it is conceivable to provide the temporary storage structure or the non-permanent object type in each case only with the attributes required for the implementation of a corresponding partial processing procedure specific to the sub-object type.

Furthermore, it may be that the storage unit is configured in such a way that the attributes can automatically be made available temporarily, in particular in a process-specific, process-specific step and/or transaction-specific manner, according to predefined rules.

In a further embodiment of the system according to the invention the object and the associated sub-objects are in each case represented, filed and therethrough instantiated in a databank of the computer system by one or more hierarchically classifiable directories specific to the object type or sub-object type. In this case the directory or directories are in each case structured in a generalisable manner, i.e. they include for example a mask that can be employed for the various types of object, in particular types of objects of a hierarchy level.

In another embodiment of the system according to the invention appropriately implemented interfaces are provided, via which the partial processing procedures on the sub-objects and specific to the sub-object type can be transferred for implementation to external processing units, in particular computer units.

Moreover, the present invention comprises a computer program with program coding means that are suitable for executing a method according to the invention when the computer program runs on a computing system.

The present invention moreover relates to a computer program product on which a computer program together with program coding means is stored, which are suitable for carrying out a method according to the invention when the computer program runs on a computer.

The method according to the invention as well as the system according to the invention contribute considerably to raising the transparency and reusability of processing models as well as their implemented modules by end users without programming knowledge. At the same time the volume of data can be reduced, which in turn means an increase in the transfer rate to program interfaces and component interfaces. Furthermore, it is not absolutely necessary for process-initiating components to have access to information that can be provided only by processing components.

Further advantages and modifications of the invention follow from the description and the accompanying drawings.

It is understood that the features mentioned hereinbefore and that still have to be explained hereinafter can be employed not only in the respective specified combination, but also in other combinations or in isolation, without going beyond the scope of the present invention.

All preceding statements or statements to be made hereinafter with regard to hierarchies may also be employed for directed networks of objects without cyclical arrangements. This means that simply a sortable implementation direction for the algorithms for transmission and aggregation need be given, which is appropriately terminated. For this purpose the network does not need to be coherent, nor is a type network without cycles required.

### Brief description of the Drawings

The invention is illustrated diagrammatically in the drawings with the aid of an embodiment and is described in detail hereinafter with reference to the drawings.
Figure 1 shows a diagrammatic representation of a possible model on which an embodiment of the method according to the invention can be carried out.
Figure 2 shows a diagrammatic representation of a possible embodiment of an object type and an object based thereon, for which a further possible embodiment of the method according to the invention can be employed.
Figure 3 shows a diagrammatic representation of a possible structure of an object type including types of processing procedures associated therewith, on which an embodiment of the method according to the invention can be carried out.
Figure 4 shows a diagrammatic representation of a possible way of breaking down an object type into types of sub-objects, which in turn are coupled to corresponding partial processing procedures specific to the sub-object type.
Figure 5 shows a diagrammatic representation of a possible structuring of an object type, on which an embodiment of the method according to the invention can be carried out.
Figure 6 shows a diagrammatic representation of a scenario in which a further embodiment of the method according to the invention can be employed.

### Detailed Description

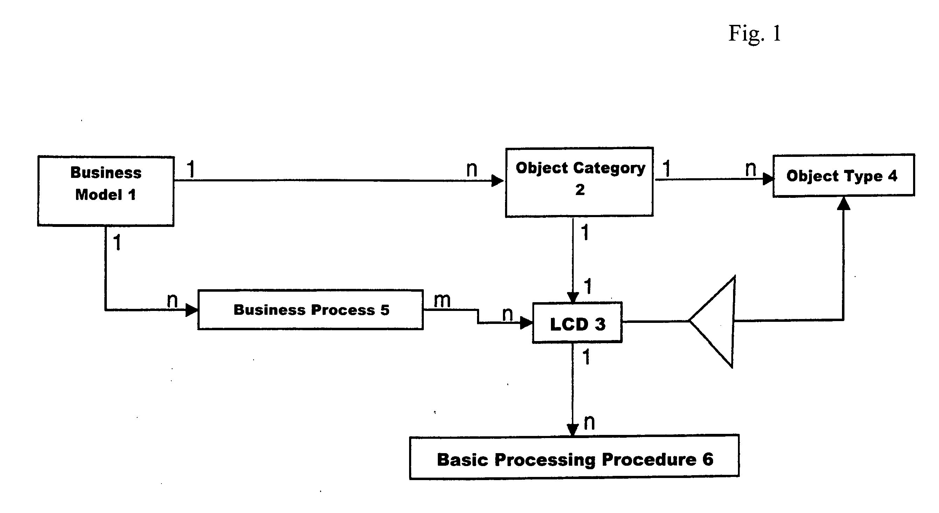

Figure 1 shows a diagrammatic representation of a possible structuring of a business object, on which an embodiment of the method according to the invention can be carried out. In this connection a basic business model 1, which may for example be a model for specifying and processing target agreements, is subdivided into several, for example n, so-called object categories 2. This is clarified in figure 1 by corresponding labelling of the arrow connecting the business model 1 and the object category 2. An abstract target or a type of target as a logical definition of an abstract target, which could for example be defined by a business or enterprise, forms an object category 2. To each object category 2 there are moreover allocated several, for example n, object types 4, which in turn are associated with a specific type of target, of which the abstract target or the type of target predetermined by the object category 2 can be composed. The structure illustrated here is based on the assumption that the types of object 4 represented in the object category 2 can be reduced to a common higher-ranking object type 3 that comprises all common features of the types of object 4 represented in the category 2. In this connection one speaks of a "lowest common denominator (LCD)" of the object types 4. The object types 4 themselves differ as regards further specific properties. It is furthermore assumed here, that for the higher-ranking common object type 3 that comprises all common properties of the object types 4 represented in the category, there already exists a given databank model as well as several, for example n, basic processing procedures 6, such as for example storage, reading and deletion. In addition a generalised business transaction model forms the basis according to which all, for example n, business processes 5 allocated to this business model 1 run according to business rules. In this connection, for example m business processes 5 may be used for n such LCDs 3 of object types 4. Since the object types 4 are subordinate types of target, they may be elementary of complex targets. Each complex type of target may be composed of arbitrarily many other, already defined, types of target. The nesting depth is in this connection arbitrary, though as a rule is limited. For elementary targets, target achievement grades can be determined from target values, actual values and corrected values, directly for instance in the aforementioned example of target agreements. Based on this, a target achievement grade of the higher-ranking type of target 3 can then for example be determined, and in addition for example a remuneration to be paid can then be specified according to defined business processes 5.

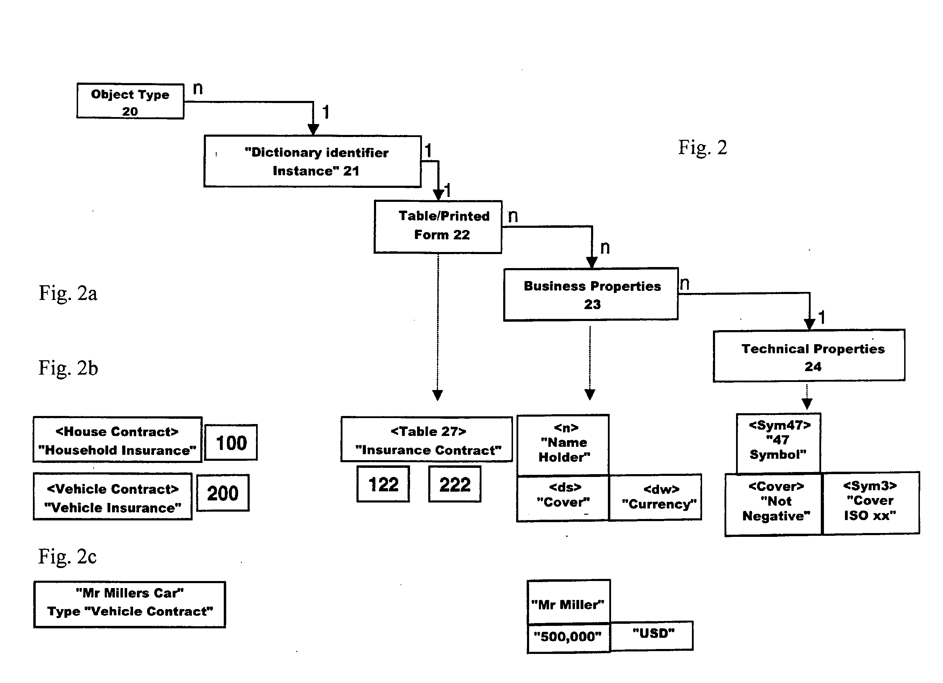

Figure 2a shows a possible representation of an object type, such as can be filed and instantiated as an object by allocating specific values. A global identification or structure 21, which is termed a "dictionary instance identifier", can as a rule be allocated to an object type 20. This identification or structure 21 is characterised by an identification number. In addition this identification or structure 21 can in turn be represented in the form of a table or a printed form 22. The respective entries in the tables or forms are determined via business properties 23 and via technical properties 24.

Figure 2b shows a possible instantiation, still to be realised, of an object type 20 illustrated in figure 2a. In this case the object type 20 may for example be an insurance contract. This object type 20 may in this connection for example be instantiated as a household insurance contract 100 or a vehicle insurance contract 200. The corresponding insurance contract, whether it be the household insurance contract 122 or the vehicle insurance contract 222, is then filed in a structure 21 associated therewith in a table 22 associated with the object type 20. The correspondingly filed business properties 23 then include for example the insurer and/or insured party, the insured sum as well as the appropriate currency, which is shown by the dotted arrow. Corresponding technical data 24 are then allocated to the corresponding business properties, which is again illustrated by a dotted arrow.

Figure 2c shows for example an object as an instance of a vehicle insurance contract. The object is in this case identified as "Mr Miller's car". As business properties 23 associated therewith, Mr Miller is entered as the insured party, "500000" as the sum insured, and "USD" as the currency.

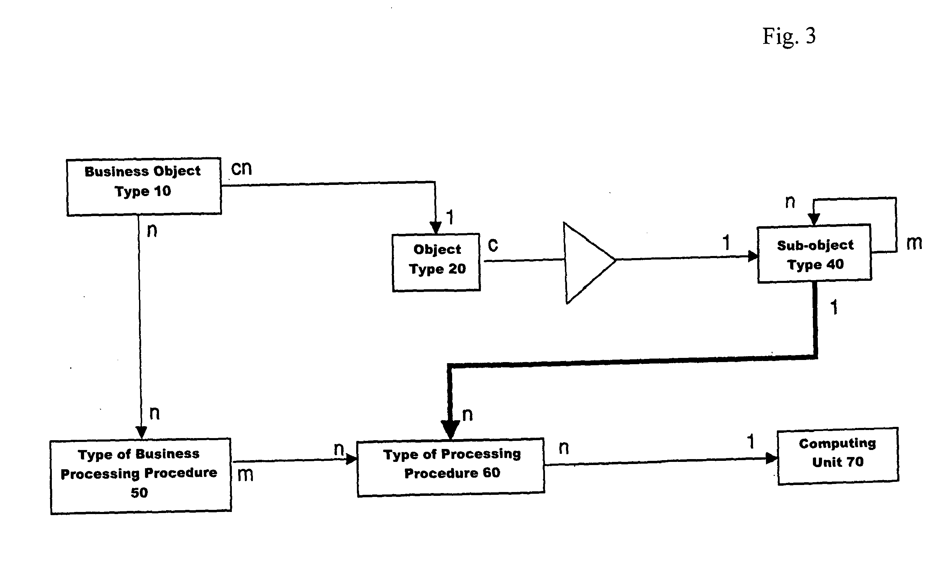

Figure 3 shows in a diagrammatic representation a possible subdivision of an object type 20 associated with a type of business object 10, and a corresponding subdivision of types of processing procedures 60 associated therewith. A complex object type 20 can as a rule be broken down into sub-object types 40, which in turn can be hierarchically arranged so that a respective father-child relationship, as is illustrated by a return arrow, is formed among these sub-object types 40. One or more types of partial processing procedures 60 may be allocated to each sub-object type 40. These types of partial processing procedures 60 may in turn be transferred via correspondingly implemented interfaces to one or more external processing units 70 for implementation. A type of processing procedure 50 associated with the type of business object 10 may in turn be associated with the various types of partial processing procedures 60 in such a way that, in the implementation, the corresponding partial processing results produce via a functional relationship a processing procedure result specific to the business object, for the corresponding processing procedure 50. In this connection it is also conceivable for several, for example m, business processing procedures to be associated with in each case several, for example n, partial processing procedures 60, i.e. to use in each case partial processing results obtained therefrom. The object type 20 is thus broken down into separately processable, hierarchically classifiable sub-object types 40, in which at least some of the sub-object types 40 can be associated with respective predetermined types of partial processing procedures 60 specific to the sub-object type, with the aid of which correspondingly instantiated sub-object types 40 can be processed. The processing and/or the implementation of the corresponding partial processing procedures 60 may take place via one or more external computing units 70. Processing results obtained therefrom and specific to the sub-object are in turn made available and combined via a functional relationship in a processing procedure ranking higher than the partial processing procedures 60, and from this an object-specific processing result for the processing procedure 50 is derived. In order to implement the partial processing procedures 60 specific to the sub-object type, preferably rule-based attributes of hierarchically higher-ranking instantiated sub-object types 40 and/or attributes of the higher-ranking instantiated object type 20 are in each case temporarily made available. In each case a temporary storage structure or a non-permanent object type is generated for the temporary provision of the aforementioned attributes for the instantiated sub-object types 40 to be correspondingly processed, in which the attributes are temporarily filed and transferred to the corresponding partial processing procedures 60 specific to the sub-object type.

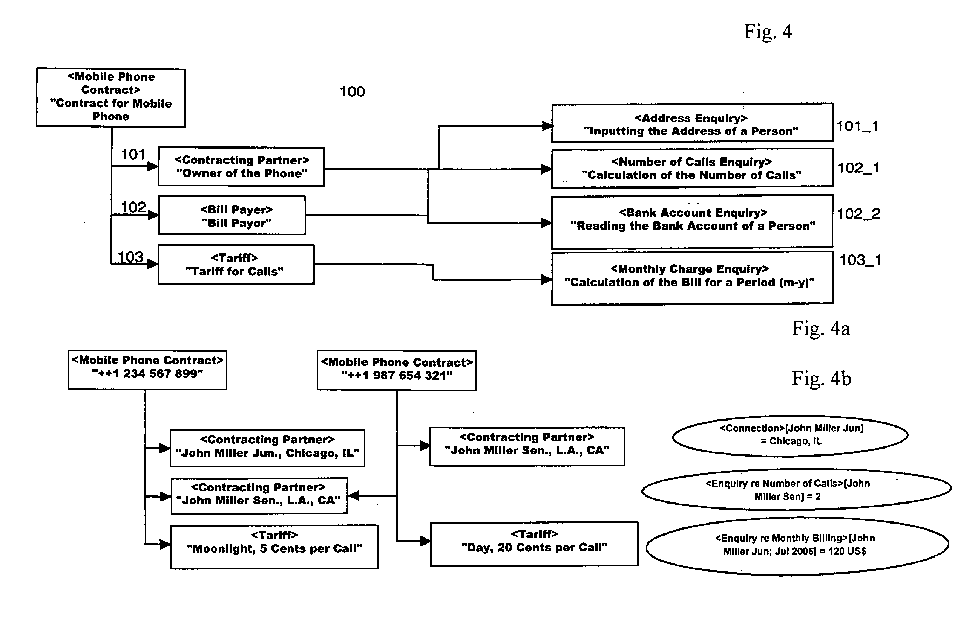

Fig. 4 shows a possible breakdown of an object type into corresponding sub-object types, which in turn are associated with one or more types of partial processing procedures specific to the sub-object type. In the example illustrated here the object type is a mobile phone contract. This object type is broken down into three sub-object types, namely a contracting party 101, i.e. a person for whom the contract is concluded, a person 102 who settles the accounts associated with the contract, and a tariff 103 specified in writing in the contract. Each of these sub-object types 101, 102, 103 can now be associated with one or more types of processing procedures specific to the sub-object type. Thus, for example, in the case illustrated here the sub-object type 101, namely "Contracting Party", can be coupled to a type of processing procedure 101_1 for ascertaining the address associated with the said contracting party. The sub-object type 102, namely "Bill Payer" may in the case illustrated here be associated for example with two different types of processing procedures 102_1 and 102_2 specific to the sub-object type. In this connection this may for example be a type of processing procedure 102_1 by means of which the number of telephone calls made can be determined and furthermore may involve a type of processing procedure 102_2 independent thereof, by means of which the bank account of the bill payer can be read. The sub-object type 103, namely "Tariff", may be associated with a type of processing procedure 103_1, with the aid of which the bill can be calculated for a specific period.

An instantiation of the hierarchy of object types illustrated in figure 4a is shown in figure 4b. The higher-ranking object type 100, namely "Mobile Phone Contract", is instantiated in the form of two objects that are associated with different telephone numbers. Each object is coupled to a corresponding mobile phone number. Whereas the mobile phone contract corresponding to the mobile phone number "++1 234 567 899" has "John Miller Junior" as contracting party, the mobile phone contract corresponding to the mobile phone number "++1 987 654 321" has John Miller Senior as the contracting party. The sub-object type "Bill Payer" is the same person for both contracts, namely by "John Miller Senior". The sub-object type "Tariff" is in turn covered differently for both contracts. If now for example an enquiry is made as to who is the contracting party corresponding to mobile phone number "++1 234 567 899", how many calls have been made using this mobile phone number, and what was the bill in a specific period, then the corresponding processing procedures can be carried out as partial processing procedures specific to the sub-object type on the individual illustrated instantiated sub-object types, i.e. on the sub-objects, from which it follows that the contracting party corresponding to mobile phone number "++1 234 567 899" is "John Miller Junior", that for example two phone calls were made on the mobile number "++1 234 567 899", and that in the month of July for example a bill of "USD 120" had been incurred. Due to the hierarchical breakdown of an object type into sub-object types and the associated splitting of a type of processing procedure into types of partial processing procedures specific to the sub-object type correspondingly associated with the sub-object types, a complex enquiry becomes a set of several individual simple processing procedures that can be carried out independently of one another. In addition it is possible, as illustrated in figure 4b, for individual sub-objects to be allocated to several of objects, whereby storage resources can be saved. The structure of an object type illustrated here and types of processing procedures associated therewith shows that generic object types and/or sub-object types and types of processing procedures or types of partial processing procedures associated therewith can be reused without additional implementability.

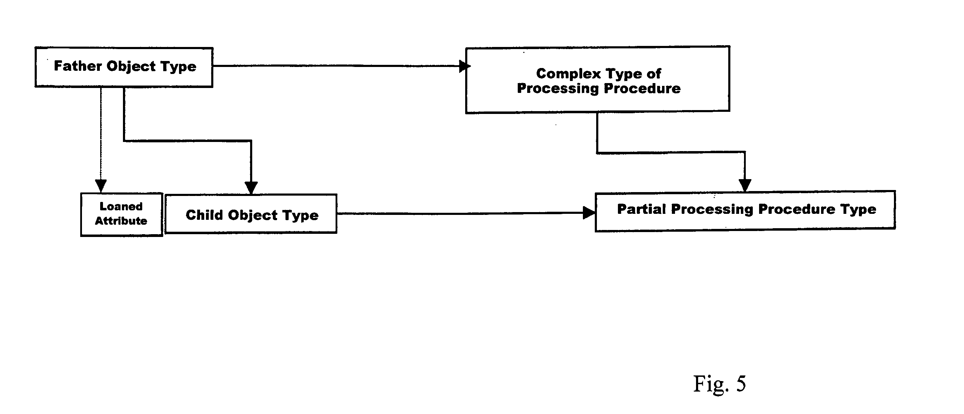

Figure 5 shows a further diagrammatic representation of a hierarchical subdivision of an object type into a higher-ranking object type, a so-called "father" object type, and a sub-object type subordinate thereto, a so-called "child" object type. When carrying out partial processing procedures specific to the sub-object type and associated with the corresponding sub-object, it is often necessary to make properties of the higher-ranking object available to the corresponding partial processing procedure. In this connection it is possible to file such properties permanently together with the sub-object so that the properties and attributes are always available for the processing of the corresponding sub-object. This approach is however associated with a large necessary storage capacity. In order to avoid this, it may be envisaged that corresponding attributes of the higher-ranking object be made available only temporarily to the sub-object when carrying out corresponding partial processing procedures. To this end a new storage structure is temporarily generated, in which attributes of the higher-ranking object are filed as "loaned attributes" preferably in a rule-based manner automatically when implementing a corresponding partial processing procedure on the sub-object, and are thus made available to the said partial processing procedure. In this connection it may be envisaged that in general all available attributes of the higher-ranking object or objects are temporarily made available to a sub-object, or only the attributes of the higher-ranking objects that are necessary for the implementation of the corresponding partial processing procedure can be made available selectively. Due to such a temporary provision of attributes of higher-ranking objects, storage space can be saved and the corresponding object can be made available to various applications via implemented interfaces without a large amount of data together with the object having had to be transferred.

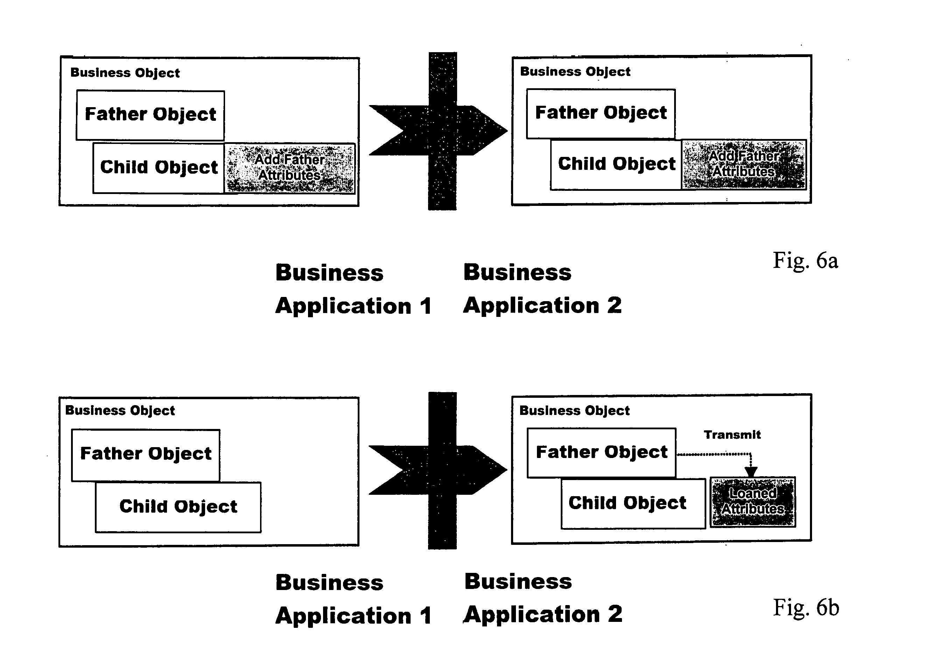

Figure 6 shows a possible scenario in which an embodiment of the method according to the invention may be employed.

Figure 6a shows a business object that is made available by a business application 1 via an interface or via an interface of a business application 2. The business object is hierarchically structured and broken down into a father object and a child object subordinate thereto. The business application 2 may be a processing application that can carry out one or more processing procedures on the business object. Since it is possible that, as already explained several times hereinbefore, when processing the child object attributes allocated to the father object are required, these attributes are allocated constantly, i.e. permanently, also to the child object and are thus filed in a redundant manner. In this way on the one hand storage space is permanently occupied, and on the other hand it is necessary to provide a large volume of data at the interface. Since the business object 1 has no knowledge of which attributes of the father object are required to implement a partial processing procedure on the child object through the business application 2, all attributes of the father object are also permanently allocated to the child object which, as already mentioned, leads to an unnecessarily high volume of data for the business application 1.

Figure 6b shows an alternative possibility that can be realised by an embodiment of the method according to the invention, of how a business object at an interface can be made available by a business application 1 to a business application 2. As in figure 6a, the business object is hierarchically structured and is broken down into a father object and a child object subordinate thereto. The business application 2 may yet again be a processing application that can carry out one or more processing procedures on the business object. If now the business application 1 makes the business object available to the business application 2 via the interface, then the attributes of the father object are not already "prophylactically" allocated to the child object for the case where these are required in a processing procedure of the child object to be carried out on the part of the business application 2. When carrying out a processing procedure on the child object on the part of the business application 2, a temporary storage structure or a non-permanent object type is instead generated, where the attributes of the father object are filed and can thus temporarily be made available for the implementation of the processing procedure on the child object. In this connection either all attributes of the father object may be filed, or only those attributes of the father object that are required for the implementation of the processing procedure. This can be controlled via transmission rules, which can be defined and implemented. How the rules are to be defined, i.e. what limits or conditions have to be taken into account, can in this connection be predetermined specifically according to the application. In contrast to the scenario shown in figure 6a, in the scenario shown in figure 6b no unnecessarily large volume of data is made available at the interface. Furthermore, the redundant filing of permanent data that takes up an unnecessarily large amount of storage space is avoided.

A practical example is briefly explained hereinafter, in which an embodiment of the method according to the invention may be applied. In the already mentioned field of target agreements it is for example possible for an insurance company to define in abstract form for all its general agencies an abstract target for a business year. The abstract target then forms, in the wording of the present invention, an object category. The abstract target may for example be given by:
1. setting a production value for a new business in the "health insurance" sector;
2. setting a production value for an expanding business in the "life assurance" sector;
3. weighting the target achievement grade "expanding business life assurance" by a figure of 75%;
4. weighting the target achievement grade of the "new business health insurance" by a figure of 25%.

In order to determine a target achievement grade of the complex target defined by the abstract target, first of all the target achievement grade of subordinate targets that are to be termed sub-objects within the context of the present invention, may be determined. The sub-objects correspond in the aforementioned example to the targets that are specified on the one hand for the "life assurance" sector and on the other hand for the "health insurance" sector. The target achievement grades of these targets and sub-objects are combined logically and mathematically with one another by means of weighting and aggregation, to determine the target achievement grade of the higher-ranking target. An appropriate reward on the basis of the target achievement grade of the complex higher-ranking target is regulated at the level of the complex target. In order to determine the respective target achievement grades in the subordinate targets, i.e. in the sub-objects, it is possible that attributes of the higher-ranking target are temporarily required, such as for example data from a clerk, with which the target agreement was met. When determining the target achievement grades of the sub-objects, further attributes that are coupled to the corresponding clerk and that are valid for both sub-objects, may be necessary. For this purpose these attributes are, as already mentioned, made available temporarily. If for example it is now found that the target achievement grade in the "life assurance" sector is 120% and the target achievement grade in the "health insurance" sector is 100%, then by combination and weighting as specified in the abstract target, an overall target achievement of 115% is obtained. This target achievement grade of 115% is now the basis on which further calculations, for example as regards a reward for the clerk, can be made. In this example it can once again be clearly shown how an object can be broken down into separately processable, hierarchically classifiable sub-objects, and how the sub-objects are processed using the respective predetermined partial processing procedures specific to the sub-object type, wherein sub-object-specific processing results obtained therefrom are combined via a functional relationship in a higher-ranking processing procedure, and from this an object-specific processing result for the processing procedure can be derived. In order to carry out the partial processing procedures specific to the sub-object type, in each case there are temporarily provided in particular rule-based attributes of the hierarchically higher-ranking object or of hierarchically higher-ranking sub-objects.

## Claims

1. A method for the implementation of a processing procedure on an object allocated to an object category as an instance of an object type in a computer system, in which
- the object is broken down into separately processable, hierarchically classifiable sub-objects as instances of corresponding sub-object types,
- at least a part of the sub-objects are processed by means of respective predetermined partial processing procedures specific to the sub-object type,
- processing results obtained therefrom specific to the sub-object are made available, and combined via a functional relationship in a processing procedure of higher rank than the partial processing procedures, and an object-specific processing result for the processing procedure is derived therefrom,
wherein in order to implement the partial processing procedures specific to the sub-object type, object attributes and/or attributes of other sub-objects, in particular hierarchically correspondingly higher-ranking sub-objects, are in each case temporarily made available.

2. The method according to claim 1, in which in each case a temporary storage structure or a non-permanent object type is generated for the temporary provision of the attributes for the corresponding sub-objects to be processed, in which the attributes are temporarily filed and transferred to the corresponding partial processing procedures specific to the sub-object type.

3. The method according to claim 2, in which the temporary storage structure or the non-permanent object type is in each case provided only with the attributes required for carrying out a corresponding partial processing procedure specific to the sub-object type.

4. The method according to one of the preceding claims, in which the attributes are automatically temporarily made available in particular in a process-specific, process step-specific and/or transaction-specific manner according to predefined rules implemented in the computer system.

5. The method according to one of the preceding claims, in which the object and the sub-objects of the object are represented, filed and moreover instantiated in a databanks of the computer system, each by means of one or more hierarchically classified directories specific to the object type or sub-object type, wherein the directory or directories are in each case structured in a generalisable manner.

6. The method according to one of the preceding claims, in which the partial processing procedures specific to the sub-object type and carried out on the sub-objects are transferred via correspondingly implemented interfaces to external processing units, in particular computer units, for implementation.

7. The method according to one of the preceding claims, in which apart from attributes, in each case intermediate processing results, in particular of correspondingly subordinate sub-objects, are temporarily made available for the implementation of the partial processing procedures specific to the sub-object type.

8. System for the management of objects and for the implementation of at least one processing procedure on at least one of the objects allocated in each case to an object category, in which
a. the object is broken down as an instance of an object type into separately processable and hierarchically organised sub-objects as instances of corresponding sub-object types and is filed in a storage unit,
b. at least one processing unit is made available, in which are predetermined partial processing procedures specific to the sub-object type, with which at least some of the sub-objects can be processed, and a processing procedure of higher rank than the partial processing procedures, in which results of partial processing procedures specific to the sub-object type are combined via a functional relationship and an object-specific processing result for the processing procedure can be derived therefrom, and
c. at least one control unit is provided that is suitable for making temporarily available in each case object attributes and/or attributes of other sub-objects, in particular hierarchically correspondingly higher-ranking sub-objects, for the implementation of the partial processing procedures specific to the sub-object type.

9. System according to claim 8, in which the control unit is suitable for generating in each case a temporary storage structure or a non-permanent object type for the temporary provision of the attributes for the corresponding sub-objects to be processed, in which the attributes are temporarily filed and can be transferred to the corresponding partial processing procedures specific to the sub-object type.

10. System according to claim 9, in which the temporary storage structure or the non-permanent object type is provided in each case only with the attributes required for the implementation of a corresponding partial processing procedure specific to the sub-object type.

11. System according to one of claims 8, 9 and 10, in which the control unit is configured in such a way that the attributes can automatically be temporarily made available, in particular in a process-specific process step-specific and/or transaction-specific manner, according to predefined rules.

12. System according to one of claims 8 to 11, in which the object and the sub-objects of the object are represented, filed and therethrough instantiated in a databank of the computer system, each by means of one or more hierarchically classifiable directories specific to the object type or sub-object type, wherein the directory or directories are in each case structured in a generalisable way.

13. System according to one of claims 8 to 12, in which the correspondingly implemented interfaces are provided, via which the partial processing procedures on the sub-objects and specific to the sub-object type can be transferred to external processing units, in particular to computing units for implementation.

14. Computer program with program coding means in order to carry out all steps of a method according to one of claims 1 to 7 when the computer program runs on a computer or on a corresponding computing unit.

15. Computer program product with a computer-readable medium and a computer program stored on the computer-readable medium with program coding means which are suitable to carry out a method according to one of claims 1 to 7 when the computer program is run on a computer or on a corresponding computing unit.
